# EUROPÄISCHE PATENTSCHRIFT

(11) **EP 1 694 777 B1**
(45) Veröffentlichungstag und Bekanntmachung des Hinweises auf die Patenterteilung: **21.11.2012**
(21) Anmeldenummer: 04803621.4
(22) Anmeldetag: 08.12.2004
(51) Int. Cl.: C09B 67/22, C09D 11/00, G03G 9/08, G03F 7/00

(54) **VERWENDUNG EINER PIGMENTZUBEREITUNG AUF BASIS VON C.I. PIGMENT YELLOW 74**
USE OF A PIGMENT PREPARATION BASED ON CI PIGMENT YELLOW 74
UTILISATION D'UNE PREPARATION PIGMENTAIRE A BASE DE PIGMENT JAUNE C.I. 74

(30) Priorität: 12.12.2003 DE 10358211
(43) Veröffentlichungstag der Anmeldung: 30.08.2006
(73) Patentinhaber: Clariant Produkte (Deutschland) GmbH, 65929 Frankfurt am Main (DE)
(72) Erfinder: GRIMM, Felix, W., 65719 Hofheim (DE); SCHÜLLER, Jörg, 50321 Brühl (DE); WEBER, Joachim, CH-4153 Reinach (CH); ROHR, Ulrike, 68199 Mannheim (DE)
(74) Vertreter: Hütter, Klaus
(86) Internationale Anmeldenummer: PCT/EP2004/013945
(87) Internationale Veröffentlichungsnummer: WO 2005/056694

(56) Entgegenhaltungen:
- EP-A- 1 316 588
- WO-A-02/064680
- GB-A- 2 356 634
- GB-A- 2 364 322
- JP-B- 45 011 026
- US-A- 3 759 733
- US-A- 4 457 783
- US-A- 5 024 698
- US-B1- 6 503 317
- DATABASE WPI Section Ch, Week 199834 Derwent Publications Ltd., London, GB; Class E21, AN 1998-393679 XP002317840 -& JP 10 158555 A (DAINICHISEIKA COLOR & CHEM MFG) 16. Juni 1998 (1998-06-16)

## Beschreibung

Die vorliegende Erfindung betrifft neue Verwendungen von Monoazopigmentzubereitungen auf Basis von C.I. Pigment Yellow 74.

Die US-3 759 733 offenbart Pigmentzubereitungen aus dem Kupplungsprodukt eines diazotierten Anilins mit einem Acetoacetylarylamid und aus einem wasserlöslichen Farbstoff. Es wird der Einsatz dieser Pigmentzubereitungen in lösemittelhaltigen Illustrationstiefdruckfarben (decorative paints) beschrieben, jedoch nicht in anderen Systemen wie beispielsweise wässrigen Druckfarben.

Die JP-45-11026 offenbart ebenfalls Pigmentzubereitungen aus dem Kupplungsprodukt eines diazotierten Anilins mit einem Acetoacetylarylamid und aus einem wasserlöslichen Farbstoff. Der Einsatz der Pigmentzubereitungen ist auf nicht-wässrige Systeme beschränkt.

Die JP 10-158 555 offenbart Pigmentgemische aus unterschiedlich substituierten gelben Monoazo-acetoacetylarylamid-Pigmenten für den Einsatz in Inkjet-Tinten.

GB 2 364 322 A beschreibt eine Kombination von P.Y. 74 mit Sulfonsäuregruppen tragenden Acetoacetanilid-Monoazofarbstoffen für den Einsatz in Inkjet-Tinten.

EP-A-1 316 588 beschreibt eine Druckfarbenzusammensetzung auf Basis einer Pigmentmischung aus P.Y. 74 und einer davon abweichenden Kupplungskomponente.

WO-A-02/064680 offenbart Pigmentzubereitungen aus einem organischen Pigment und einem sauren Pigmentdispergator.

Bei der Verwendung von Pigmentzubereitungen zum Färben von hochmolekularen organischen Materialien werden hohe Anforderungen an die anwendungstechnischen Eigenschaften der Pigmente gestellt, wie hohe Farbstärken, hohe Buntheit (Chroma) und gute Licht- und Wetterechtheit. Beim Einsatz in Drucksystemen sind hohe Transparenz der Drucke und niedrige Viskosität der hochpigmentierten Druckfarbenkonzentrate beim Dispergieren gefordert. Ähnliche Anforderungen werden bei Einsatz in elektrophotographischen Tonern, Ink-Jet Tinten, Farbfiltern oder elektronischen Tinten gestellt. Hier kommen noch spezielle Anforderungen hinzu, wie beispielsweise passende triboelektrische Eigenschaften.

Die bekannten Monoazopigmentzubereitungen auf Basis C.I. Pigment Yellow 74 genügen nicht allen heutigen Anforderungen. Daher bestand ein Verbesserungsbedarf und die Aufgabe, Pigmentzubereitungen zu finden, die bei der Verwendung in den oben genannten Anwendungen zu den bislang bekannten Zubereitungen überlegene Eigenschaften aufweisen.

Es wurde gefunden, dass die Aufgabe überraschenderweise durch die Verwendung nachstehend definierter Pigmentzubereitung gelöst wird.

Gegenstand der Erfindung ist die Verwendung von Pigmentzubereitungen, enthaltend C.I. Pigment Yellow 74 als Basispigment und einen oder mehrere Pigmentdispergatoren zum Pigmentieren von elektrophotographischen Tonern und Entwicklern, Tinten, wässrigen Bindemittelsystemen und Farbfiltern, dadurch gekennzeichnet, dass die Pigmentdispergatoren ausgewählt sind aus der Gruppe C.I. Pigment Yellow 61, 61:1, 62, 62:1, 168, 169 und 191:1 oder eine Kombination von Verbindungen der Formel (IV) und (V) sind 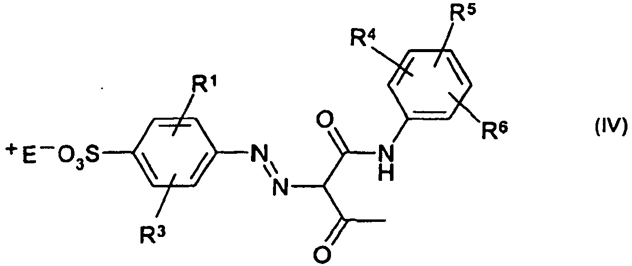 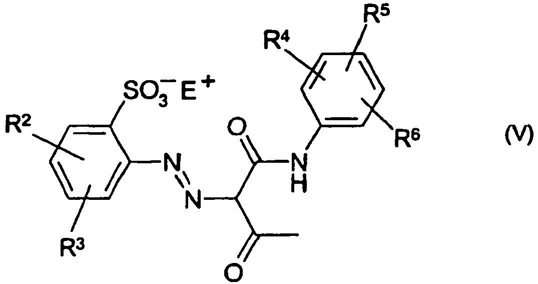 worin
R¹, R², R³, R⁴, R⁵ und R⁶ unabhängig voneinander Wasserstoff, Halogen, C₁-C₄-Alkyl, C₁-C₄-Alkoxy, Nitro, Trifluormethyl, Cyano, Phenyl, eine SO₃⁻E⁺- oder eine COO-E⁺-Gruppe bedeuten, mit der Maßgabe, dass mindestens eine und höchstens zwei ionische Gruppen des Typs SO₃⁻E⁺- oder COO⁻E⁺ vorhanden sind, und dass im Falle von zwei ionischen Gruppen die eine Gruppe im Kupplerrest und die andere im Basenrest der Verbindung der Formel (I) sitzt;
E⁺ H⁺;
das Äquivalent M^{m+}/m eines Metallkations M^{m+}, vorzugsweise aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist, wie beispielsweise Li¹⁺, Na¹⁺, K¹⁺, Mg²⁺, Ca²⁺, Sr²⁺, Ba²⁺, Mn²⁺, Cu²⁺, Ni²⁺, Co²⁺, Zn²⁺, Fe²⁺, Al³⁺, Cr³⁺ oder Fe³⁺;
ein Phosphoniumion; oder ein unsubstituiertes oder substituiertes Ammoniumion bedeutet.

Bevorzugt bedeuten R¹, R², R³, R⁴, R⁵ und R⁶ Wasserstoff, Chlor, Methyl, Trifluormethyl oder Methoxy, und bevorzugt trägt der Pigmentdispergator eine ionische Gruppe SO₃⁻E⁺.

Als substituiertes Ammoniumion kommt beispielsweise ein Ion der Formel

N⁺R⁹R¹⁰R¹¹R¹²

in betracht, wobei
R⁹, R¹⁰, R¹¹ und R¹² gleich oder verschieden sind und die Bedeutung Wasserstoff, Hydroxy, Amino, Phenyl, (C₁-C₄)-Alkylen-phenyl, C₅-C₃₀-Cycloalkyl, C₂-C₃₀-Alkenyl, oder verzweigtes oder unverzweigtes C₁-C₃₀-Alkyl haben, wobei der Phenylring, die (C₁-C₄yAlkylen-phenyl-Gruppe, die C₅-C₃₀-Cycloalkylgruppe, die C₂-C₃₀-Alkenylgruppe und die C₁-C₃₀-Alkylgruppe durch ein oder mehrere, z.B. 1, 2, 3 oder 4, Substituenten aus der Gruppe Cl, Br, CN, NH₂, OH, C₆H₅, mit 1, 2 oder 3 C₁-C₂₀-Alkoxyresten substituiertes C₆H₅, Carbamoyl, Carboxy, C₂-C₄-Acyl, C₁-C₈-Alkyl, NR⁷R⁸, wobei R⁷ und R⁸ die nachstehend genannte Bedeutung haben, und C₁-C₄-Alkoxy, z.B. Methoxy oder Ethoxy, substituiert sein können, oder die Alkylgruppe und die Alkenylgruppe perfluoriert oder teilfluoriert sein können;
der die Bedeutung eines Restes der Formel (Ib) haben,

-[X-Y]ₕ-R⁸ (Ib)

worin
h eine Zahl von 0 bis 100, vorzugsweise 0 bis 20, besonders bevorzugt 0, 1, 2, 3, 4 oder 5;
X einen C₂-C₆-Alkylenrest, einen C₅-C₇-Cycloalkylenrest, oder eine Kombination dieser Reste ist, wobei diese Reste durch 1 bis 4 C₁-C₄-Alkylreste, Hydroxyreste, C₁-C₄-Alkoxyreste, (C₁-C₄)-Hydroxyalkylreste und/oder durch 1 bis 2 weitere C₅-C₇-Cycloalkylreste substituiert sein können, oder worin X, wenn h > 1 ist, auch eine Kombination der genannten Bedeutungen sein kann;
Y eine -O-, 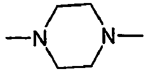 oder eine -NR⁷-Gruppe,
oder worin Y, wenn h > 1 ist, auch eine Kombination der genannten Bedeutungen sein kann;
R⁷ und R⁸ unabhängig voneinander ein Wasserstoffatom, eine substituierte oder unsubstituierte, oder teil- oder perfluorierte, verzweigte oder unverzweigte C₁-C₂₀-Alkylgruppe, eine substituierte oder unsubstituierte C₅-C₈-Cycloalkylgruppe oder eine substituierte oder unsubstituierte, oder teil- oder perfluorierte C₂-C₂₀-Alkenylgruppe darstellen, wobei die Substituenten Hydroxy, Phenyl, Cyano, Chlor, Brom, Amino, C₂-C₄-Acyl oder C₁-C₄-Alkoxy sein und vorzugsweise 1 bis 4 an der Zahl sein können, oder
R⁷ und R⁸ zusammen mit dem N-Atom der NR⁷-Gruppe einen gesättigten, ungesättigten oder aromatischen heterocyclischen 5- bis 7-gliedrigen Ring bilden, der gegebenenfalls 1 oder 2 weitere Stickstoff-, Sauerstoff- oder Schwefelatome oder Carbonylgruppen im Ring enthält, gegebenenfalls durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert ist, und der gegebenenfalls 1 oder 2 benzoannellierte gesättigte, ungesättigte oder aromatische, carbocyclische oder heterocyclische Ringe trägt;
oder wobei R⁹ und R¹⁰ zusammen mit dem N-Atom des Ammoniumions ein fünfbis siebengliedriges gesättigtes oder ungesättigtes Ringsystem, das ggf. noch weitere Heteroatome aus der Gruppe O, S und N oder Carbonylgruppen enthält, bilden können, und das gegebenenfalls 1 oder 2 ankondensierte gesättigte, ungesättigte oder aromatische, carbocyclische oder heterocyclische Ringe trägt; wobei das Ringsystem und die ggf. ankondensierten Ringe durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert sein können,
beispielsweise vom Pyrrolidon-, Imidazolidin-, Hexamethylenimin-, Piperidin-, Piperazin- oder Morpholin-Typ;
oder wobei R⁹, R¹⁰ und R¹¹ zusammen mit dem N-Atom des Ammoniumions ein fünf- bis siebengliedriges aromatisches Ringsystem, das ggf. noch weitere Heteroatome aus der Gruppe O, S und N oder Carbonylgruppen enthält, bilden, und das gegebenenfalls 1 oder 2 ankondensierte gesättigte, ungesättigte oder aromatische, carbocyclische oder heterocyclische Ringe trägt, wobei das Ringsystem und die ggf. ankondensierten Ringe durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert sein können,
beispielsweise vom Pyrrol-, Imidazol-, Pyridin-, Picolin-, Pyrazin-, Chinolin- oder Isochinolin-Typ.

Als substituiertes Ammonium kommt ferner das 1/p Äquivalent eines Ammoniumions der Formel (Ic) in Betracht 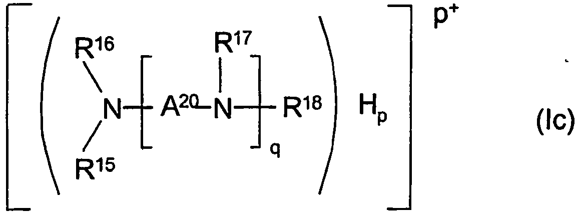 worin R¹⁵, R¹⁶ , R¹⁷ und R¹⁸ unabhängig voneinander Wasserstoff oder eine (Poly)alkylenoxygruppe der Formel (Id) bedeuten;

-[(CH(R⁸⁰)-)ⱼO]ₖ-R⁸¹ (Id)

in der j die Zahl 2 oder 3 ist, k eine Zahl von 1 bis 100 ist, der Rest R⁸⁰ Wasserstoff, C₁-C₄-Alkyl oder, sofern k > 1 ist, eine Kombination davon bedeutet und der Rest R⁸¹ Wasserstoff, C₁-C₄-Alkyl oder die Gruppe -(CH(R⁸²)-)ᵢNH₂ bedeutet, i die Zahl 2 oder 3 bedeutet und der Rest R⁸² Wasserstoff, C₁-C₄-Alkyl oder eine Kombination davon bedeutet; q eine Zahl von 1 bis 10, vorzugsweise 1, 2, 3, 4 oder 5 ist;
p eine Zahl von 1 bis 5, wobei p ≤q+1 ist;
A²⁰ einen verzweigten oder unverzweigten C₂-C₆-Alkylenrest bedeutet; oder worin A²⁰, wenn q > 1 ist, auch eine Kombination von verzweigten oder unverzweigten C₂-C₆-Alkylenresten sein kann.

Als substituiertes Ammoniumion kommt ferner ein sich von einer Polyaminoamido- oder Polyaminoverbindung ableitendes Ammoniumion in Betracht, das einen solchen Anteil an reaktionsfähigen Polyaminogruppen hat, dass der Aminindex zwischen 100 und 800 mg KOH pro g der Polyaminoamido- oder Polyaminoverbindung beträgt, wie es beispielsweise in der DE-A-27 39 775 offenbart wird.

Als substituiertes Ammoniumion kommt ferner ein Kation eines polymeren Ammoniumsalzes mit einem mittleren Molekulargewicht von 500 bis 2.500.000, das in Wasser oder in C₁-C₄-Alkohol löslich ist, wie es beispielsweise in der DE-A-4 214 868 offenbart wird, in Betracht.

Als substituiertes Ammoniumion kommt ferner das 1/r Äquivalent eines von einem Diamin abgeleiteten Ammoniumions der Formel (III) in Betracht 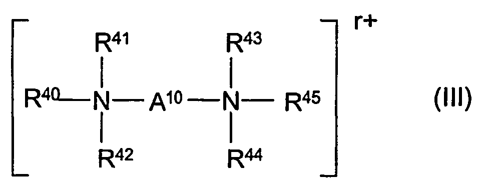
wie es beispielsweise in der WO 01/14479 offenbart wird,
und worin
R⁴⁰ C₆-C₃₀-Alkyl, bevorzugt lineares C₈-C₂₀-Alkyl, oder C₆-C₃₀-Alkenyl, bevorzugt linear, bedeutet,
R⁴¹ eine freie Valenz, Wasserstoff, C₁-C₃₀-Alkyl, C₂-C₃₀-Alkenyl, C₃-C₃₀-Cycloalkyl, C₆-C₁₄-Aryl oder C₇-C₃₈-Aralkyl bedeutet,
R⁴², R⁴³ und R⁴⁵ gleich oder verschieden sind und C₁-C₆-Alkyl, bevorzugt Methyl,
C₃-C₃₀-Cycloalkyl, C₆-C₁₄-Aryl oder C₇-C₃₈-Aralkyl bedeutet,
R⁴⁴ eine freie Valenz, Wasserstoff, C₁-C₆-Alkyl, bevorzugt Methyl, C₃-C₃₀-Cycloalkyl, C₆-C₁₄-Aryl oder C₇-C₃₈-Aralkyl bedeutet,
mit der Maßgabe, dass R⁴¹ und R⁴⁴ nicht gleichzeitig eine freie Valenz bedeuten,
r die Zahl 2, oder für den Fall, dass R⁴¹ oder R⁴⁴ eine freie Valenz bedeutet, die Zahl 1 bedeutet,
A¹⁰ C₁-C₁₂-Alkylen oder C₂-C₁₄-Alkenylen bedeutet, bevorzugt 2, 3 oder 4 C-Atome enthält, insbesondere 3;
oder
R⁴¹ und R⁴³ zusammen mit den zwei Stickstoffatomen, an die sie geknüpft sind, und mit A¹⁰ einen Ring bilden, bevorzugt Piperazinyl;
und/oder
R⁴⁰ und R⁴⁵ zusammen mit dem Stickstoffatom, an das sie geknüpft sind, einen Ring bilden, bevorzugt Piperidinyl, Morpholinyl, Piperazinyl oder N-(C₁-C₆-Alkyl)-piperazinyl.

Die in der Definition vor R⁴⁰ bis R⁴⁵ genannten Reste sind bevorzugt unsubstituiert oder sind mit Substituenten aus der Gruppe OH, C₁-C₆-Alkyl, bevorzugt Methyl, C₁-C₆-Alkoxy, CN und Halogen, besonders Chlor oder Brom, substituiert.

Aryl bedeutet bevorzugt Phenyl, Aralkyl bevorzugt Benzyl oder 2-Phenylethyl und Cycloalkyl bevorzugt Cyclopentyl oder Cyclohexyl.

Bevorzugt sind solche Ionen der Formel (III), in der R⁴¹ und R⁴⁴ Wasserstoff und R⁴², R⁴³ und R⁴⁵ Methyl bedeuten, besonders bevorzugt solche Ionen der Formel (III), in der R⁴¹ bis R⁴⁵ Methyl bedeuten. Weiterhin bevorzugt sind solche Ionen der Formel (III), die sich von Aminen natürlicher Öle und Fette, wie Kokosöl, Maisöl, Getreideöl, Fisch- oder Walfischtran, besonders aus Talgfett, ableiten.

Von besonderen Interesse sind weiterhin Pigmentdispergatoren der Formel (IV) und (V), bei denen E⁺ die Bedeutung H⁺ hat;
oder wobei im Falle des Äquivalents M^{m+}/m das Metallkation M^{m+} die Bedeutung Na⁺, Ca²⁺, Mg²⁺, Sr²⁺, Ba²⁺, Mn²⁺ oder Al³⁺ hat;
oder wobei E⁺ ein protoniertes tertiäres Amin ist, das aus Ölen und Fetten wie Talg, Kokosöl, Maisöl, Getreideöl, Fisch- oder Walfischtran gewonnen wurde, und beispielsweise Triisooctylamin, Dimethyltalgfettamin, Dimethylsojaamin, Dimethyloctadecylamin oder hydriertes Monomethyl-di(talgfettamin) oder ein alkoxyliertes Derivat eines Fettamins ist, beispielsweise Talgalkyldi(2-hydroxyethyl)-amin, Polyoxyethylen(5)talgamin, Polyoxyethylen(8)oleylamin, N,N',N'-Tris(2-hydroxyethyl)-N-talg-1,3-diaminopropan, N,N',N'-Polyoxyethylen(12)-N-talg-1,3-diaminopropan;
oder wobei E⁺ ein quaternäres Ammoniumion ist, das sich vorzugsweise von den aus obigen Ölen und Fetten gewonnen Aminen oder alkoxylierten Fettaminen ableitet, beispielsweise durch Methylierung oder durch Umsetzung mit Benzylchorid, und beispielsweise Stearylbenzyl- oder Cocosalkyl-dimethylbenzylammonium oder -2,4-dichlorbenzylammonium, Hexadecyl-, Stearyl-, Dodecyl- oder Cetyltrimethylammonium, Di-hydriertes Talgfettalkyl-, Dicocosalkyl- oder Distearyldimethylammonium, Oleyl- oder Kokos-di(2-hydroxyethyl)-methylammonium, hydriertes Polyoxyethylen(15)talg-methylammonium, N,N,N',N',N'-Pentamethyl-N-talg-1,3-propandiammonium, permethyliertes N-Stearyldiethylentriamin, permethyliertes N-Stearyltriethylentetramin, N-(3-Dodecyloxy-2-hydroxypropyl)-octadecyldimethyl-ammonium, Methyl-tri(2-octyl)ammonium, N,N-Di-(beta-stearoylethyl)-N,N-dimethylammonium, Laurylpyridinium, 2-Hydroxy-[5-chlor-, 5-isooctyl-, 5-t-butyl- oder n-nonyl-]1,3-xylylen-bispyridinium, 2-Methoxy-5-isooctyl-1,3-xylylen-bispyridinium, 2-Hydroxy-5-isooctyl-1,3-xylylen-bischinolinium, 2-Hydroxy-5-isooctyl-1,3-xylylenbisisochinolinium oder Behenyltrimethylammonium ist;
oder wobei E⁺ ein Phosphoniumion wie Hexadecyltributylphosphonium, Ethyltrioctylphosphonium oder Tetrabutylphosphonium ist;
wobei die ursprünglichen Anionen der eingesetzten quaternären Ammoniumverbindungen oder Phosphoniumverbindungen beispielsweise Halogenid, Sulfat, Alkoxysulfat, Alkoxyphosphat gewesen sein können.

Von besonderem Interesse sind weiterhin Pigmentdispergatoren der Formel (IV) und (V) bei denen das dem Ammoniumion N⁺R⁹R¹⁰R¹¹R¹² zugrunde liegende Amin ein primäres oder sekundäres Amin, insbesondere Mischungen primärer und sekundärer Amine mit gegebenenfalls gemischten Kohlenwasserstoffresten natürlich vorkommender Öle und Fette wie Talg, Kokosöl, Maisöl, Getreideöl, Fisch- oder Watfischtran oder Holzharz, ist; konkret zu nennen sind beispielsweise Ammoniak, Methylamin, Triethylamin, Butylamine, Dibutylamine, Tributylamin, Hexylamine, Dodecylamin, Stearylamin, Diethylamin, Di-n-butylamin, Ethylendiamin, Anilin, N-Methylanilin, Benzylamin, Phenylethylamin, Cyclohexylaminoethylamin, 2-Cyclohexyl-aminopropylamin, 3-Stearylaminopropylamin, 2-Dimethylaminoethylamin, 2-Diethylaminoethylamin, 2-Dipropylaminoethylamin, 2-Dibutylaminoethylamin, 3-Dimethylaminopropylamin, 3-Diethylaminopropylamin, 3-Cyclohexylamino-propylamin, N-Methylpiperazin, N-Aminopropylmorpholin, N-Aminoethylpiperidin, N-Aminoethylpyrrolidin, N-Aminopropylpipecolin, 4-Diethylamino-1-methylbutylamin-(1), Lauryl-, Kokos- oder Talgfettamin, Lauryl-, Oleyl- oder Talgfettpropylendiamin, Talgfettdipropylentriamin, Talgfetttripropylentetraamin, 1,1,3,3-Tetramethylbutylamin primäre Amine mit tertiären C₁₆-C₂₂-Alkylgruppen, N,N-Bis-aminopropyl-talgfettamin, 2-Ethylhexoxypropylamin oder Dehydroabietylamin.

Insbesondere werden als Pigmentdispergatoren solche aus der Gruppe C.I. Pigment Yellow 61, 61:1, 62, 62:1, 168, 169 und 191:1 eingesetzt.

Die Pigmentdispergatoren können in den entsprechenden tautomeren Formen vorliegen, die Formeln (IV) und (V) umfassen daher auch die tautomeren Formen.

Bevorzugte Pigmentzubereitungen im Sinne der vorliegenden Erfindung enthalten
a) 50 bis 99,9 Gew.-%, vorzugsweise 60 bis 99,5 Gew.-%, besonders bevorzugt 65 bis 99 Gew.-%, Pigment Yellow 74
b) 0,1 bis 25 Gew.-%, vorzugsweise 0,5 bis 15 Gew.-%, besonders bevorzugt 1 bis 10 Gew.-%. 1, 2, 3, 4, 5 oder 6, vorzugsweise 1, 2, 3 oder 4, insbesondere 1 oder 2 Pigmentdispergatoren
c) 0 bis 25 Gew.-%, vorzugsweise 0 bis 15 Gew.-% an Hilfsmitteln,
   wobei die Anteile der jeweiligen Komponenten auf das Gesamtgewicht der Zubereitung (100 Gew.-%) bezogen sind.

Als Hilfsmittel kommen beispielsweise Tenside, nichtpigmentäre und pigmentäre Dispergiermittel, Füllstoffe, Stellmittel, Harze, Wachse, Entschäumer, Antistaubmittel, Extender, Antistatika, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon in Betracht. Nuancierkomponenten werden üblicher Weise in Mengen bis zu 10 Gew.-% und Hilfsmittel in Mengen bis zu 40 Gew.-%, jeweils bezogen auf die Gesamtmenge des erfindungsgemäß eingesetzten C.I. Pigment Yellow 74 eingesetzt. Es können jedoch in Ausnahmefällen auch höhere Mengen vorkommen.

Die erfindungsgemäße Pigmentzubereitung kann nach verschiedenen Verfahren hergestellt werden, beispielsweise indem man das Basispigment und den Pigmentdispergator nach getrennter Synthese miteinander in Kontakt bringt, oder indem der Pigmentdispergator und das Basispigment gemeinsam synthetisiert werden.

Die Pigmentdispergatoren und C.I. Pigment Yellow 74 sind bekannte Verbindungen, die sich nach dem Fachmann bekannten Verfahren durch Azokupplung herstellen lassen, wobei ein entsprechendes Amin diazotiert wird und mit dem entsprechenden Acetoacetanilid als Kuppler gekuppelt wird. Im Falle des Pigmentdispergatorstors wird gewöhnlicherweise die freie Säure bzw. ein leichter lösliches Salz des Pigmentdispergators durch Azokupplung hergestellt und ggf. anschließend zu einem schwerer löslichen Salz verlackt. Da die Verlackung nicht vollständig verlaufen muss, können mehrere verschiedene Pigmentdispergatoren in der Pigmentzubereitung enthalten sein.

Die Zugabe des Pigmentdispergators zum Basispigment kann an einer beliebigen Stelle im Herstellungsverfahren das Basispigments und in verschiedenen Formen erfolgen, beispielsweise kann der Pigmentdispergator als Suspension oder als wässrig-feuchter Presskuchen zur Suspension des Basispigments zugegeben, die wässrig-feuchten Presskuchen des Basispigments und des Pigmentdispergators können in entsprechenden Apparaten vermischt werden, oder sie werden trocken miteinander vermischt, beispielsweise in Form von Granulaten oder Pulvern. Eine Zugabe des Pigmentdispergators vor der Isolation des Basispigments kann beispielsweise auch vor oder nach einer thermischen Behandlung der Suspension des Basispigments geschehen.

Im Falle der gemeinsamen Synthese können die Azokupplungen prinzipiell diskontinuierlich direkt oder indirekt geschehen, d.h. durch Zugabe des Diazoniumsalzes zum Kuppler oder umgekehrt, es kann auch eine kontinuierliche Verfahrensweise gewählt werden durch Einsatz einer Mischdüse, eines Mikroreaktors oder eines Mikrojetreaktors und gleichzeitigem, kontinuierlichem Einspeisen des Diazoniumsalzes und der Kupplungskomponente.

Sowohl das Diazoniumsalz als auch die Kupplungskomponente können gelöst oder als Suspension eingesetzt werden, im Falle der indirekten Kupplung ist auch der Einsatz der Kupplungskomponente in fester Form möglich.

Die Aminkomponenten des Basispigments und des Pigmentdispergators können gemeinsam oder getrennt diazotiert werden. Die Diazoniumsalze können bei direkter Kupplung getrennt oder als Mischung gemeinsam zugegeben oder bei indirekter Kupplung gemeinsam vorgelegt werden. Die Kupplungskomponenten des Basispigments und des Pigmentdispergators können bei direkter Kupplung gemeinsam vorliegen oder bei indirekter Kupplung gemeinsam oder getrennt zugegeben werden.

Es kann auch zuerst die eine Komponente (Basispigment oder Pigmentdispergator) hergestellt werden und die Azokupplung der zweiten Komponente in Gegenwart der Suspension der ersten Komponente durchgeführt werden.

Bevorzugt wird das Basispigment durch direkte Kupplung hergestellt, indem das als Lösung oder Suspension vorliegenden Diazoniumsalz zur frisch gefällte Suspension der Kupplungskomponente zugegeben wird, und der Pigmentdispergator wird als feuchter Presskuchen oder als trockenes Pulver zur fertigen Kuppelsuspension des Basispigments zugegeben.

Auch sind Pigmentzubereitungen mit mehreren, beispielsweise bis zu 6, bevorzugt bis zu 4 Pigmentdispergatoren möglich.

Eine Überführung des Pigmentdispergators von einer leichter löslichen Form, beispielsweise des Natriumsalzes, in eine schwerer lösliche Form, beispielsweise des Calciumsalzes oder eines Aminsalzes, geschieht gewöhnlich durch Zugabe der entsprechenden stickstoffhaltigen Verbindungen oder anorganischen Salze nach Herstellung der leichter löslichen Form des Pigmentdispergators durch Azokupplung.

Es kann vorteilhaft sein, die Kupplung in Gegenwart gebräuchlicher, die Kupplung fördernder Mittel durchzuführen, wie beispielsweise langkettige Aminoxide und Phosphinoxide.

Auch Kupplungen in wässrig-organischen oder rein organischen Medium können zur Herstellung der Kupplungsprodukte zum Einsatz kommen.

Die bei der Azokupplung wesentlichen Verfahrensparameter wie beispielsweise Zeit, Temperatur, pH-Wert, Einsatz von Puffern, Lösemitteln oder Tensiden sind aus der Literatur dem Fachmann bekannt.

Zur Erzielung der gewünschten anwendungstechnischen, besonders der coloristischen Eigenschaften kann eine Wärmebehandlung der Kuppelsuspension des Basispigments vor der endgültigen Isolation erforderlich sein, die in Gegenwart oder Abwesenheit des Pigmentdispergators durchgeführt werden kann. Dazu kann auch der isolierte und feuchte Presskuchen des Präpigments wieder in einem flüssigen Medium dispergiert werden. Als flüssige Medien kommen neben der Kuppelbrühe und Wasser auch organische Lösungsmittel oder eine Mischung aus Wasser und organischem Lösungsmittel in Betracht, wobei das Wasser und das organische Lösungsmittel weder bei Raumtemperatur noch bei einer anderen Temperatur vollständig miteinander mischbar sein müssen, um eine für die Anwendung spezifische Kristallmodifikation und/oder Kristallform und/oder Korngrößenverteilung zu erzeugen. Bei der Wärmebehandlung können Temperaturen von beispielsweise 50 bis 200°C auftreten. Als organisches Lösemittel kommen in Frage: Alkohole mit 1 bis 10 C-Atomen, Glykole, Polyglykole, Ether, Glykolether, Polyethylenglykolmonomethylether, Polyethylenglykoldimethylether, Ketone, aliphatische Säureamide, Harnstoffderivate, cyclische Carbonsäureamide, Nitrile, aliphatische oder aromatische Amine, gegebenenfalls halogenierte aliphatische Kohlenwasserstoffe, gegebenenfalls durch Alkyl, Alkoxy, Nitro, Cyano oder Halogen substituierte aromatische Kohlenwasserstoffe, aromatische Heterocyclen, Sulfone und Sulfoxide, sowie Mischungen dieser organischen Lösemittel. Bevorzugte Lösemittel sind C₁-C₆-Alkohole, insbesondere Methanol, Ethanol, n- und Isopropanol, Isobutanol, n- und tert.-Butanol und tert.-Amylalkohol; C₃-C₆-Ketone, insbesondere Aceton, Methylethylketon oder Diethylketon; Tetrahydrofuran, Dioxan, Ethylenglykol, Diethylenglykol oder Ethylenglykol-C₃-C₅-alkylether, insbesondere 2-Methoxyethanol, 2-Ethoxyethanol, Butylglykol, Toluol, Xylol, Ethylbenzol, Chlorbenzol, o-Dichlorbenzol, N,N-Dimethylacetamid, N-Methylpyrrolidon, Dimethylsulfoxid oder Sulfolan.

Die Zugabe von Hilfsmitteln kann zu einem beliebigen Zeitpunkt erfolgen, auf einmal oder in mehreren Portionen. Sie können beispielsweise bereits vor der Kupplung, vor dem Finish oder erst nach dem Finish oder auch durch Mischen in trockenem Zustand zugegeben werden.

Als Tenside kommen anionische oder anionaktive, kationische oder kationaktive und nichtionische oder amphotere Substanzen oder Mischungen dieser Mittel in Betracht.

Als anionaktive Substanzen kommen beispielsweise Fettsäuretauride, FettsäureN-methyltauride, Fettsäureisethionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbemsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise-kolophoniummodifizierte Maleinatharze und Kondensationsprodukte auf Basis von Cyanurchlorid, Taurin, N,N'-Diethylaminopropylamin und p-Phenylendiamin in Betracht. Bevorzugt sind Harzseifen, d.h. Alkalisalze von Harzsäuren.

Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro g der Polyaminoamido- oder Polyaminoverbindung, und Salze dieser kationenaktiven Substanzen, wie beispielsweise Acetate oder Chloride, in Betracht.

Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkoholalkylenoxid-Addukte und Alkylphenolpolyglykolether in Betracht.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse^{®}, Avecia; Disperbyk^{®}, Byk-Chemie, Efka^{®}, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermitteln sind Pigmentdispergatoren gemeint, die sich von einem organischen Pigment als Grundkörper ableiten und durch chemische Modifizierurig dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder Sulfosäureestergruppen haltige Pigmentdispergatoren, Ether- oder Thioethergruppen haltige Pigmentdispergatoren, oder Carbonsäure-, Carbonsäureester- oder Carbonamidgruppen haltige Pigmentdispergatoren.

Anionische Gruppen der als Hilfsmittel eingesetzten nichtpigmentären und pigmentären Dispergatoren, Tenside oder Harze können auch verlackt werden, beispielsweise durch Ca-, Mg-, Ba-, Sr-, Mn- oder Al-Ionen oder durch quaternäre Ammoniumionen. Dies kann vor oder nach dem Finish geschehen.

Mit Füllstoffe bzw. Extender sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid. Dabei hat sich die Zugabe besonders vor der Pulverisierung der getrockneten Pigmentzubereitung bewährt.

Die erfindungsgemäße Pigmentzubereitung kann als vorzugsweise wässriger Presskuchen oder Feuchtgranulat zum Einsatz kommen, in der Regel handelt es sich jedoch um feste Systeme von rieselfähiger, pulverförmiger Beschaffenheit oder um Granulate.

Die erfindungsgemäßen Pigmentzubereitungen lassen sich zum Pigmentieren von wässrigen Bindemittelsytemen, beispielsweise von wässrigen Lacksystemen, wässrigen Anstrichfarben und insbesondere wässrigen Druckfarbensystemen, sowie von neueren farbgebenden Systemen, wie elektrophotographischen Tonern und Entwicklern, Tinten, insbesondere Ink-Jet-Tinten, Elektretmaterialien, Farbfiltern und Pulverlacken, verwenden.

Diese Systeme enthalten hochmolekulare organische Materialien; bezogen auf das zu pigmentierende, hochmolekulare organische Material setzt man die erfindungsgemäßen Pigmentzubereitungen in einer Menge von 0,05 bis 30 Gew.-%, vorzugsweise 0,1 bis 15 Gew.-%, ein.

Wässrige Bindemittelsysteme im Sinne der Erfindung enthalten Wasser und/oder sind mit Wasser verdünnbar.

Wässrige Bindemittelsysteme enthalten hochmolekulare organische Materialien, die mit den erfindungsgemäßen Pigmentzusammensetzungen pigmentiert werden, dies sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Epoxidharze, ungesättigte Kunstharze (Polyester, Acrylate) mit den unterschiedlichen Härtemechanismen, Wachse, Casein, Silikone und Silikonharze; einzeln oder in Mischungen.

Dabei spielt es keine Rolle, ob die erwähnten hochmolekularen organischen Verbindungen als Lösungen oder Dispersionen vorliegen. Je nach Verwendungszweck erweist es sich als vorteilhaft, die erfindungsgemäßen Pigmentzubereitungen als Blend oder in Form von Präparationen oder Dispersionen zu benutzen.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Pigmentzubereitungen geeignet als Farbmittel in Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Gegenstand der Erfindung ist weiterhin die Verwendung der beschriebenen Pigmentzubereitung als Farbmittel für Drucktinten, insbesondere für Ink-Jet-Tinten.

Unter Ink-Jet-Tinten versteht man sowohl Tinten auf wässriger (einschließlich Mikroemulsionstinten) und nicht-wässriger ("solvent-based") Basis, UV-härtbare Tinten sowie solche Tinten, die nach dem Hot-Melt-Verfahren arbeiten.

Ink-Jet-Tinten auf Lösungsmittelbasis enthalten im wesentlichen 0,5 bis 30 Gew.-%, vorzugsweise 1 bis 15 Gew.-%, der erfindungsgemäßen Pigmentzubereitung, 70 bis 95 Gew.-% eines organischen Lösungsmittels oder Lösungsmittelgemisches und/oder einer hydrotropen Verbindung. Gegebenenfalls können die lösemittelbasierenden Ink-Jet-Tinten Trägermaterialien und Bindemittel enthalten, die im "Solvens" löslich sind, wie z.B. Polyolefine, Natur- und Synthesekautschuk, Polyvinylchlorid, Vinylchlorid/Vinylacetat-Copolymerisate, Polyvinylbutyrale, Wachs/Latex-Systeme oder Kombinationen dieser Verbindungen.

Gegebenenfalls können die lösungsmittelbasierenden Ink-Jet-Tinten noch weitere Zusatzstoffe enthalten, wie z.B. Netzmittel, Entgaser/Entschäumer, Konservierungsmittel und Antioxidantien.

Mikroemulsionstinten basieren auf organischen Lösemitteln, Wasser und gegebenenfalls einer zusätzlichen Substanz, die als Grenzflächenvermittler wirkt (Tensid). Mikroemulsionstinten enthalten 0,5 bis 30 Gew.-%, vorzugsweise 1 bis 15 Gew.-%, der erfindungsgemäßen Pigmentzubereitung, 0,5 bis 95 Gew.-% Wasser und 0,5 bis 95 Gew.-% organische Lösungsmittel und/oder Grenzflächenvermittler.

UV-härtbare Tinten enthalten im wesentlichen 0,5 bis 30 Gew.-% der erfindungsgemäßen Pigmentzubereitung, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 und ca. 140°C liegt.

Hot-Melt-Ink-Jet-Tinten bestehen im wesentlichen aus 20 bis 90 Gew.-% Wachs und 1 bis 10 Gew.-% der erfindungsgemäßen Pigmentzubereitung. Weiterhin können 0 bis 20 Gew.-% eines zusätzlichen Polymers (als "Farbstofflöser"), 0 bis 5 Gew.-% Dispergiermittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. die Kristallisation des Wachses) sowie 0 bis 2 Gew.-% Antioxidans enthalten sein.

Die erfindungsgemäßen Drucktinten, insbesondere Ink-Jet-Tinten, können hergestellt werden, indem die Farbmittelpräparationen in das Mikroemulsionsmedium in das nicht-wässrige Medium oder in das Medium zur Herstellung der UV-härtbaren Tinte oder in das Wachs zur Herstellung einer Hot-Melt-Ink-Jet-Tinte eindispergiert wird.

Zweckmäßigerweise werden die dabei erhaltenen Drucktinten für Ink-Jet-Anwendungen anschließend filtriert (z.B. über einen 1 µm Filter).

Weiterhin sind die erfindungsgemäßen Pigmentzubereitungen auch als Farbmittel für Farbfilter, sowohl für die additive wie auch für die subtraktive Farberzeugung, sowie als Farbmittel für elektronische Tinten ("electronic inks" bzw. "e-inks") oder "electronic paper" ("e-paper") geeignet.

Bei der Herstellung sogenannter Farbfilter, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z.B. TFT-LCD= Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüberhinaus können die pigmentierten Color Filter auch durch Ink Jet-Druckverfahren oder andere geeignete Druckverfahren aufgebracht werden.

Es war überraschend und nicht vorhersehbar, dass die erfindungsgemäßen Pigmentzubereitungen beim Einsatz in wässrigen Druckfarbensystemen und den neueren farbgebenden Systemen zu guten Ergebnissen führen.

Zur Beurteilung der Eigenschaften der Pigmentzubereitungen auf dem Drucksektor wurde aus der Vielzahl der bekannten wässrigen Drucksysteme ein wässriges Flexodrucksystem auf Acrylharzbasis (FD) ausgewählt.

Zur Beurteilung der Eignung der Pigmentzubereitungen zur Verwendung bei der Herstellung von elektrophotographischen Tonern wurde ihre Dispergierbarkeit in wässrigen Systemen geprüft. Dazu wurde eine wässrige Weißdispersionsfarbe auf Polyvinylacetatbasis (PVA) gewählt. Die Pigmentzubereitung wird in Form einer wässrigen Dispersion in dieses PVA-System eingerührt. Die wässrige Dispersion besteht aus 17 Gew.-% Pigmentzubereitung, 1,5 Gew.-% anionischem Dispergiermittel (z.B. Sulfat oder Sulfonat) und 81,5 Gew.-% Wasser, hergestellt durch Perlmahlung mit keramischen Perlen mit 0,4 bis 0,6 mm Durchmesser.

Die Bestimmung der Farbstärke und des Chroma erfolgte nach DIN 5033,

DIN 55986 und DIN 53235.

Die Bestimmung der Viskosität erfolgte nach dem Verdünnen des Mahlguts auf die Pigmentendkonzentration mit dem Viskospatel nach Rossmann, Typ 301 der Firma Erichsen.

Die Viskosität der Druckfarben wurde mittels eines Rotationsviskosimeters gemessen.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

In den nachfolgenden Beispielen bedeuten Teile jeweils Gewichtsteile und Prozente jeweils Gewichtsprozente.

### Beispiel 1

### a) Diazokomponente

84 Teile 5-Nitro-2-aminoanisol werden in 210 Teilen Wasser und 132,2 Teilen Salzsäure 31 %ig angeschlämmt. Mit 420 Teilen Eis-Wasser-Gemisch wird auf 0°C abgekühlt, durch Zugabe von 85,2 Teilen Natriumnitrit-Lösung 40 %ig diazotiert.

### b) Kuppler

In 1345 Teilen Wasser und 104 Teilen Natronlauge 25 %ig werden 103,5 Teile Acetessig-o-anisidid gelöst. Nach Zugabe von 3,5 Teilen einer 20 %igen wässrigen Lösung von Natriumlaurylsulfat wird durch Zugabe von Eis auf 10°C abgekühlt. Durch Zugabe von 48,1 Teilen Essigsäure 80 %ig wird der Kuppler gefällt. Dann werden eine Lösung von 20 Teilen eines maleinsäuremodifizierten Kolophoniumharzester in 168 Teilen Wasser und 27,3 Teilen Natronlauge 25 %ig zugegeben und mit Essigsäure 80 %ig pH 9,8 gestellt.

### c) Kupplung

Die Diazokomponente wird in einer Stunde zum Kuppler zugegeben.

### d) Zugabe des Pigmentdispergators und eines Hilfsmittels

Es werden 3,9 Teile C.I. Pigment Yellow 62 und 3,9 Teile hydriertes Talgfettamin, gelöst in 50 Teilen Wasser mit 6,4 Teilen Essigsäure 80 %ig zugegeben. Dann wird 17 Stunden bei 80°C gerührt. Die Suspension wird filtriert, der Presskuchen wird bei 130°C getrocknet.

### e) Prüfung

Im FD-System werden farbstarke Drucke erhalten mit reinem Farbton, hohem Glanz und hoher Transparenz, die Viskosität der Druckfarbe ist niedrig. Im PVA-System werden farbstarke und transparente Färbungen von reinem Farbton erhalten. Dies zeigt die gute Dispergierbarkeit.

### Beispiel 2

Das Beispiel 1 wird durchgeführt mit dem einzigen Unterschied, dass 3,9 Teile C.I. Pigment Yellow 168 an Stelle der 3,9 Teile C.I. Pigment Yellow 62 eingesetzt werden.

Im FD-System werden farbstarke Drucke erhalten mit reinem Farbton, hohem Glanz und hoher Transparenz, die Viskosität der Druckfarbe ist niedrig.

Im PVA-System werden farbstarke und transparente Färbungen von reinem Farbton erhalten. Dies zeigt die gute Dispergierbarkeit.

### Beispiel 3

380 g eines handelsüblichen Pigments P.Y.74 werden mit 20 g Pigmentdispergator P.Y.62 mechanisch gemischt.

Die Beispiele in der nachfolgenden Tabelle wurden durchgeführt analog zu Beispiel 3.

| Beispiel | Gehalt der Pigmentzubereitung an Pigmentdispergator |
|---|---|
| 3 | 5 % P.Y.62 |
| 4 | 10 % P.Y.62 |
| 5 | 2 % P.Y.62 |
| 6 | 20 % P.Y.62 |
| 7 | 0,1 % P.Y.169 |
| 8 | 5 % P.Y.169 |
| 9 | 10 % P.Y.169 |

Im FD-System werden mit den Beispiel 3 bis 9 farbstarke Drucke von hoher Reinheit, Glanz und Transparenz erhalten, die Viskosität der Druckfarben ist niedrig.

### Beispiel 10: Synthese P.Y.62 unverlackt

### a) Diazokomponente

109 Teile o-Nitroanilin-p-sulfonsäure werden in 210 ml Wasser und 118 ml Salzsäure 31%ig angeschlämmt. Mit Eis wird auf 4°C abgekühlt und mit 65 ml Natriumnitritlösung 40 %ig diazotiert.

### b) Kuppler

1345 ml Wasser, 80 ml Natronlauge 25 %ig und 95,5 g Acetessig-o-toluidid werden 1 h gerührt. mit Eis wird auf 10°C abgekühlt, dann wird der Kuppler mit 45 ml Essigsäure 80 %ig gefällt. Mit Essigsäure wird pH 6,0 gestellt.

### c) Kupplung

Die Diazosuspension wird unter die Oberfläche der Kuppelgutsuspension zugegeben. Die Kuppelsuspension wird filtriert, der Presskuchen mit Wasser gewaschen. Es wird 30 %iger wässrig-feuchter Presskuchen der unverlackten P.Y.62 erhalten.

### Beispiel 11

### a) Diazokomponente

42 Teile 5-Nitro-2-aminoanisol werden in 105 Teilen Wasser und 59 ml Salzsäure 31 %ig angeschlämmt. Mit Eis wird auf 0°C abgekühlt, durch Zugabe von 33 ml Natriumnitrit-Lösung 40 %ig diazotiert.

### b) Kuppler und Pigmentdispergator

In 672 ml Wasser und 40 ml Natronlauge 25 %ig werden 51,7 Teile Acetessig-o-anisidid gelöst. Nach Zugabe von 1,8 Teilen einer 30 %igen wässrigen Lösung von Natriumlaurylsulfat wird durch Zugabe von Eis auf 10°C abgekühlt. Durch Zugabe von 22 ml Essigsäure 80 %ig wird der Kuppler gefällt. Mit Essigsäure wird pH 6 bis 7 eingestellt. Dann wird eine Lösung von 10 Teilen eines maleinsäuremodifizierten Kolophoniumharzester in 84 ml Wasser und 10,5 ml Natronlauge 25%ig zugegeben und mit Essigsäure 80 %ig auf pH 9,8 gestellt. Es werden 3,2 Teile eines 30%igen wässrig-feuchten Presskuchens von unverlacktem P.Y. 62, hergestellt gemäß Beispiel 10, zugegeben.

### c) Kupplung

Die Diazokomponente wird in einer Stunde zum Kuppler zugegeben.

### d) Zugabe eines Hilfsmittels und Verlackung des Pigmentdispergators

Es werden 4,8 Teile Cocosfettamin zugegeben. Dann werden 0,3 Teile Calciumchlorid, gelöst in 30 Teilen Wasser, zugegeben. Es wird mit Dampf auf 80°C erwärmt und 17 Stunden bei 80°C gerührt. Die Suspension wird filtriert, der Presskuchen wird bei 130°C getrocknet.

Im FD-System werden farbstarke Drucke erhalten mit reinem Farbton, die Viskosität der Druckfarbe ist niedrig.

### Beispiel 12

### a) Diazokomponente und Pigmentdispergator

42 Teile 5-Nitro-2-aminoanisol werden in 105 Teilen Wasser und 59 ml Salzsäure 31 %ig angeschlämmt. Mit Eis wird auf 0°C abgekühlt, durch Zugabe von 33 ml Natriumnitrit-Lösung 40 %ig diazotiert. Es werden 9,7 Teile eines 30 %igen wässrig-feuchten Presskuchens von unverlacktem P.Y.62, hergestellt gemäß Beispiel 10, zugegeben.

### b) Kuppler

In 672 ml Wasser und 40 ml Natronlauge 25 %ig werden 51,7 Teile Acetessig-o-anisidid gelöst. Nach Zugabe von 1,8 Teilen einer 30 %igen wässrigen Lösung von Natriumlaurylsulfat wird durch Zugabe von Eis auf 10°C abgekühlt. Durch Zugabe von 22 ml Essigsäure 80 %ig wird der Kuppler gefällt. Mit Essigsäure wird pH 6 bis 7 eingestellt. Dann wird eine Lösung von 10 Teilen eines maleinsäuremodifizierten Kolophoniumharzester in 84 ml Wasser und 10,5 ml Natronlauge 25%ig zugegeben und mit Essigsäure 80 %ig auf pH 9,8 gestellt.

### c) Kupplung

Die Diazokomponente wird in einer Stunde zum Kuppler zugegeben.

### d) Zugabe eines Hilfsmittels und Verlackung des Pigmentdispergators

Es werden 1,9 Teile eines 25 mol-fach ethoxylierten C₁₆-C₁₈-Fettalkohols und 1,6 Teile Bariumchlorid, gelöst in 30 ml Wasser, zugegeben. Es wird mit Dampf auf 80°C erwärmt und 17 Stunden bei 80°C gerührt. Die Suspension wird filtriert, der Presskuchen wird bei 130°C getrocknet.

Im FD-System werden farbstarke Drucke erhalten mit reinem Farbton und hohem Glanz und Transparenz, die Viskosität der Druckfarbe ist niedrig.

### Beispiel 13

### a) Diazokomponente

42 Teile 5-Nitro-2-aminoanisol werden in 105 Teilen Wasser und 59 ml Salzsäure 31 %ig angeschlämmt. Mit Eis wird auf 0°C abgekühlt, durch Zugabe von 33 ml Natriumnitrit-Lösung 40 %ig diazotiert.

### b) Kuppler und Pigmentdispergator

In 672 ml Wasser und 40 ml Natronlauge 25 %ig werden 51,7 Teile Acetessig-o-anisidid gelöst. Es werden 3,2 Teile eines 30 %igen wässrig-feuchten Presskuchens von unverlacktem P.Y.62, hergestellt gemäß Beispiel 10, zugegeben. Nach Zugabe von 1,8 Teilen einer 30 %igen wässrigen Lösung von Natriumlaurylsulfat wird durch Zugabe von Eis auf 10°C abgekühlt. Durch Zugabe von 22 ml Essigsäure 80 %ig wird der Kuppler gefällt. Mit Essigsäure wird pH 6 bis 7 eingestellt. Dann wird eine Lösung von 10 Teilen eines maleinsäuremodifizierten Kolophoniumharzester in 84 ml Wasser und 10,5 ml Natronlauge 25 %ig zugegeben und mit Essigsäure 80 %ig auf pH 9,8 gestellt.

### c) Kupplung

Die Diazokomponente wird in einer Stunde zum Kuppler zugegeben.

### d) Zugabe eines Hilfsmittels und Verlackung des Pigmentdispergators

Es werden 2,9 Teile Dehydroabietylamin, gelöst in 15 ml Wasser und 1,0 ml Essigsäure, und 0,7 Teile Strontiumchlorid-Hexahydrat, gelöst in 10 ml Wasser, zugegeben. Es wird mit Dampf auf 80°C erwärmt und 17 Stunden bei 80°C gerührt. Die Suspension wird filtriert, der Presskuchen wird bei 130°C getrocknet.

Im FD-System werden farbstarke Drucke erhalten mit reinem Farbton und hohem Glanz und Transparenz, die Viskosität der Druckfarbe ist niedrig.

### Beispiel 14

### a) Diazokomponente

42 Teile 5-Nitro-2-aminoanisol werden in 105 Teilen Wasser und 59 ml Salzsäure 31 %ig angeschlämmt. Mit Eis wird auf 0°C abgekühlt, durch Zugabe von 33 ml Natriumnitrit-Lösung 40 %ig diazotiert.

### b) Kuppler

In 672 ml Wasser und 40 ml Natronlauge 25 %ig werden 51,7 Teile Acetessig-o-anisidid gelöst. Nach Zugabe von 1,8 Teilen einer 30 %igen wässrigen Lösung von Natriumlaurylsulfat wird durch Zugabe von Eis auf 10°C abgekühlt. Durch Zugabe von 22 ml Essigsäure 80 %ig wird der Kuppler gefällt. Mit Essigsäure wird pH 6 bis 7 eingestellt. Dann wird eine Lösung von 10 Teilen eines maleinsäuremodifizierten Kolophoniumharzester in 84 ml Wasser und 10,5 ml Natronlauge 25 %ig zugegeben und mit Essigsäure 80 %ig auf pH 9,8 gestellt.

### c) Kupplung

Die Diazokomponente wird in einer Stunde zum Kuppler zugegeben.

### d) Zugabe Pigmentdispergator, Hilfsmittel und Verlackung des Pigmentdispergators

Es werden 16,1 Teile eines 30 %igen wässrig-feuchten Presskuchens von unverlacktem P.Y.62, hergestellt gemäß Beispiel 10, zugegeben. Dann werden 4,8 Teile Talgfettpropylendiamin und 1,8 Teile Aluminiumchlorid, gelöst in 30 ml Wasser, zugegeben. Es wird mit Dampf auf 80°C erwärmt und 17 Stunden bei 80°C gerührt. Die Suspension wird filtriert, der Presskuchen wird bei 130°C getrocknet.

Im FD-System werden farbstarke Drucke erhalten mit reinem Farbton und hoher Transparenz, die Viskosität der Druckfarbe ist niedrig.

### Beispiel 15

### a) Diazokomponente

42 Teile 5-Nitro-2-aminoanisol werden in 105 Teilen Wasser und 59 ml Salzsäure 31 %ig angeschlämmt. Mit Eis wird auf 0°C abgekühlt, durch Zugabe von 33 ml Natriumnitrit-Lösung 40 %ig diazotiert.

### b) Kuppler

In 672 ml Wasser und 40 ml Natronlauge 25 %ig werden 51,7 Teile Acetessig-o-anisidid gelöst. Nach Zugabe von 1,8 Teilen einer 30 %igen wässrigen Lösung von Natriumlaurylsulfat wird durch Zugabe von Eis auf 10°C abgekühlt. Durch Zugabe von 22 ml Essigsäure 80 %ig wird der Kuppler gefällt. Mit Essigsäure wird pH 6 bis 7 eingestellt. Dann wird eine Lösung von 10 Teilen eines maleinsäuremodifizierten Kolophoniumharzester in 84 ml Wasser und 10,5 ml Natronlauge 25%ig zugegeben und mit Essigsäure 80 %ig auf pH 9,8 gestellt.

### c) Kupplung

Die Diazokomponente wird in einer Stunde zum Kuppler zugegeben.

### d) Zugabe Pigmentdispergator und Verlackung des Pigmentdispergators

Es werden 6,4 Teile eines 30 %igen wässrig-feuchten Presskuchens von unverlacktem P.Y. 62, hergestellt gemäß Beispiel 10, zugegeben. Dann werden 3,1 Teile Cocosalkyldimethylbenzylammoniumchlorid zugegeben. Es wird mit Dampf auf 80°C erwärmt und 17 Stunden bei 80°C gerührt. Die Suspension wird filtriert, der Presskuchen wird bei 130°C getrocknet.

Im FD-System werden farbstarke Drucke erhalten mit reinem Farbton und hohem Glanz und Transparenz, die Viskosität der Druckfarbe ist niedrig.

### Beispiel 16: Synthese P.Y.61

### a) Diazokomponente

109 Teile o-Nitroanilin-p-sulfonsäure werden in 210 ml Wasser und 118 ml Salzsäure 31 %ig angeschlämmt. Mit Eis wird auf 4°C abgekühlt und mit 65 ml Natriumnitritlösung 40%ig diazotiert.

### b) Kuppler

1345 ml Wasser, 80 ml Natronlauge 25 %ig und 45 ml Essigsäure 80 %ig werden vorgelegt und 88,6 g Acetessig-o-anilid werden eingestreut. Mit Essigsäure wird pH 6,0 gestellt. Mit Eis wird auf 15°C abgekühlt.

### c) Kupplung

Die Diazosuspension wird unter die Oberfläche der Kuppelgutsuspension zugegeben. Dann wird 30 min gerührt, eine Lösung von 66,6 g Calciumchlorid in 150 ml Wasser zugegeben und auf 80°C geheizt. Es wird 1 Stunde bei 80°C gerührt. Die Kuppelsuspension wird filtriert, der Presskuchen mit Wasser gewaschen. Man erhält 38%igen wässrigen Presskuchen von P.Y.61.

### Beispiel 17

### a) Diazokomponente

42 Teile 5-Nitro-2-aminoanisol werden in 105 Teilen Wasser und 59 ml Salzsäure 31 %ig angeschlämmt. Mit Eis wird auf 0°C abgekühlt, durch Zugabe von 33 ml Natriumnitrit-Lösung 40 %ig diazotiert.

### b) Kuppler und Pigmentdispergator

In 672 ml Wasser und 40 ml Natronlauge 25%ig werden 51,7 Teile Acetessig-o-anisidid gelöst. Nach Zugabe von 1,8 Teilen einer 30 %igen wässrigen Lösung von Natriumlaurylsulfat wird durch Zugabe von Eis auf 10°C abgekühlt. Durch Zugabe von 22 ml Essigsäure 80 %ig wird der Kuppler gefällt. Mit Essigsäure wird pH 6 bis 7 eingestellt. Dann wird eine Lösung von 10 Teilen eines maleinsäuremodifizierten Kolophoniumharzester in 84 ml Wasser und 10,5 ml Natronlauge 25 %ig zugegeben und mit Essigsäure 80 %ig auf pH 9,8 gestellt. Dann werden 12,7 g eines wässrigen, 38%igen Presskuchens von P.Y.61, hergestellt gemäß Beispiel 16, zugegeben.

### c) Kupplung

Die Diazokomponente wird in einer Stunde zum Kuppler zugegeben.

### d) Zugabe des Pigmentdispergators und eines Hilfsmittels

Es werden 1,9 Teile hydriertes Talgfettamin, gelöst in 25 ml Wasser mit 5 ml Essigsäure 80 %ig zugegeben. Dann wird 17 Stunden bei 80°C gerührt. Die Suspension wird filtriert, der Presskuchen wird bei 130°C getrocknet.

Im FD-System werden farbstarke Drucke erhalten mit reinem Farbton und hohem Glanz und Transparenz.

### Beispiel 18

Beispiel 17 wird wiederholt mit dem einzigen Unterschied, das 4,8 g eines handelsüblichen P.Y.191:1 als Pigmentdispergators eingesetzt werden an Stelle der 12,7 g eines wässrigen, 38%igen Presskuchens von P.Y.61.

Im FD-System werden farbstarke Drucke erhalten mit reinem Farbton und hohem Glanz, die Viskosität der Druckfarbe ist niedrig.

## Patentansprüche

1. Verwendung einer Pigmentzubereitung, enthaltend C.I. Pigment Yellow 74 als Basispigment und einen oder mehrere Pigmentdispergatoren zum Pigmentieren von elektrophotographischen Tonern und Entwicklern, Tinten, wässrigen Bindemittelsystemen und Farbfiltern, **dadurch gekennzeichnet, dass** die Pigmentdispergatoren ausgewählt sind aus der Gruppe C.I. Pigment Yellow 61, 61:1, 62, 62:1, 168, 169 und 191:1 oder eine Kombination von Verbindungen der Formel (IV) und (V) sind 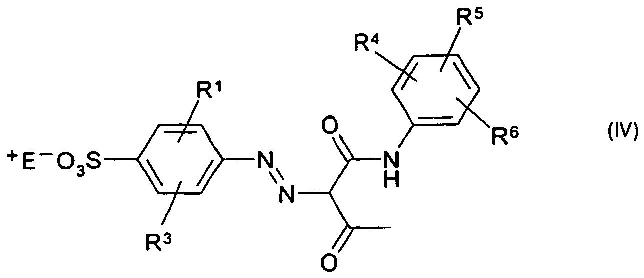 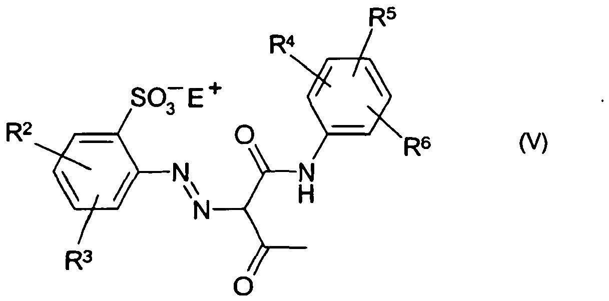 worin
R¹, R², R³, R⁴, R⁵ und R⁶ unabhängig voneinander Wasserstoff, Halogen, C₁-C₄-Alkyl, C₁-C₄-Alkoxy, Nitro, Trifluormethyl, Cyano, Phenyl, eine SO₃⁻E⁺- oder eine COO⁻E⁺-Gruppe bedeuten, mit der Maßgabe, dass mindestens eine und höchstens zwei ionische Gruppen des Typs SO₃⁻E⁺- oder COO⁻E⁺ vorhanden sind, und dass im Falle von zwei ionischen Gruppen die eine Gruppe im Kupplerrest und die andere im Basenrest der Verbindung der Formel (I) sitzt;
E⁺ H⁺;
das Äquivalent M^{m+}/m eines Metallkations M^{m+}, wobei m eine der Zahlen 1, 2 oder 3 ist;
ein Phosphoniumion; oder ein unsubstituiertes oder substituiertes Ammoniumion bedeutet.

2. Verwendung nach Anspruch 1, **dadurch gekennzeichnet, dass** R¹, R², R³, R⁴, R⁵ und R⁶ Wasserstoff, Chlor, Methyl, Trifluormethyl oder Methoxy bedeuten.

3. Verwendung nach Anspruch 1 oder 2, **dadurch gekennzeichnet, dass** E⁺ die Bedeutung H⁺, Na⁺, Ca²⁺, Mg²⁺, Sr²⁺, Ba²⁺, Mn²⁺ oder Al³⁺ hat.

4. Verwendung nach einem oder mehreren der Ansprüche 1 bis 3, **dadurch gekennzeichnet, dass** die Pigmentzubereitung
a) 50 bis 99,9 Gew.-%, vorzugsweise 60 bis 99,5 Gew.-%, Pigment Yellow 74,
b) 0,1 bis 25 Gew.-%, vorzugsweise 0,5 bis 15 Gew.-%, 1, 2, 3, 4, 5 oder 6, vorzugsweise 1, 2, 3 oder 4, Pigmentdispergatoren,
c) 0 bis 25 Gew.-%, vorzugsweise 0 bis 15 Gew.-% an Hilfsmitteln,
wobei die Anteile der jeweiligen Komponenten auf das Gesamtgewicht der Zubereitung (100 Gew.-%) bezogen sind, enthält.

5. Verwendung nach einem oder mehreren der Ansprüche 1 bis 4 zum Pigmentieren von Ink-Jet-Tinten.

6. Verwendung nach Anspruch 5, **dadurch gekennzeichnet, dass** die Ink-Jet-Tinte eine Mikroemulsionstinte, eine solvent-based Ink-Jet-Tinte oder eine Hot-melt-Ink-Jet-Tinte ist.

7. Verwendung nach einem oder mehreren der Ansprüche 1 bis 4 zum Pigmentieren von wässrigen Druckfarben, wässrigen Anstrichfarben und wässrigen Lacken.

8. Verwendung nach mindestens einem der Ansprüche 1 bis 7 in einer Menge von 0,05 bis 30 Gew.-%, bezogen auf das zu pigmentierende Material.

## Claims

1. The use of a pigment preparation comprising C.I. Pigment Yellow 74 as base pigment and one or more pigment dispersants for pigmenting electrophotographic toners and developers, inks, aqueous binder systems, and color filters, wherein the pigment dispersants are selected from the group of C.I. Pigment Yellow 61, 61:1, 62, 62:1, 168, 169, and 191:1 or a combination of compounds of the formula (IV) and (V) 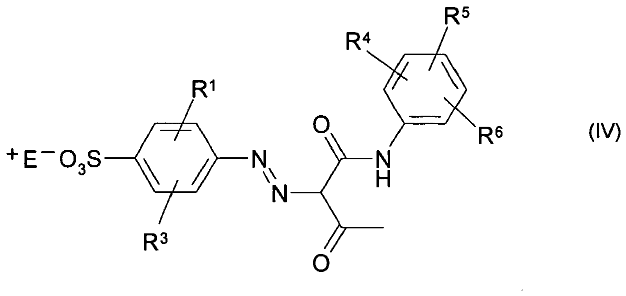 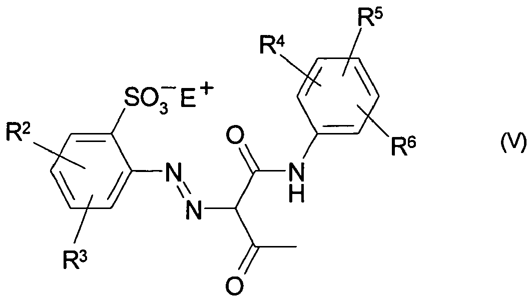 in which
R¹, R², R³, R⁴, R⁵, and R⁶ independently of one another are hydrogen, halogen, C₁-C₄ alkyl, C₁-C₄ alkoxy, nitro, trifluoromethyl, cyano, phenyl, a group SO₃⁻E⁺- or COO⁻E⁺, with the proviso that there is at least one and not more than two ionic groups of type SO₃⁻E⁺- or COO⁻E⁺, and that, in the case of two ionic groups, one group is located in the coupler residue and the other in the base residue of the compound of the formula (IV) or (V) ;
E⁺ is H⁺;
the equivalent M^{m+}/m of a metal cation M^{m+}, m being the number 1, 2 or 3;
a phosphonium ion; or an unsubstituted or substituted ammonium ion.

2. The use as claimed in claim 1, wherein R¹, R², R³, R⁴, R⁵ and R⁶ are hydrogen, chlorine, methyl, trifluoromethyl or methoxy.

3. The use as claimed in claim 1 or 2, wherein E⁺ has the definition H⁺, Na⁺, Ca²⁺, Mg²⁺, Sr²⁺, Ba²⁺, Mn²⁺ or Al³⁺.

4. The use as claimed in one or more of claims 1 to 3, wherein the pigment preparation contains
a) 50% to 99.9%, preferably 60% to 99.5% by weight of Pigment Yellow 74,
b) 0.1% to 25%, preferably 0.5% to 15% by weight of 1, 2, 3, 4, 5 or 6, preferably 1, 2, 3 or 4, pigment dispersants,
c) 0 to 25%, preferably 0 to 15% by weight of auxiliaries,
the fractions of the respective components being based on the total weight of the preparation (100% by weight).

5. The use as claimed in one or more of claims 1 to 4 for pigmenting ink-jet inks.

6. The use as claimed in claim 5, wherein the ink-jet ink is a microemulsion ink, a solvent-based ink-jet ink or a hot-melt ink-jet ink.

7. The use as claimed in one or more of claims 1 to 4 for pigmenting aqueous printing inks, aqueous paints, and aqueous varnishes.

8. The use as claimed in at least one of claims 1 to 7 in an amount of 0.05% to 30% by weight, based on the material to be pigmented.

## Revendications

1. Utilisation d'une préparation de pigment, contenant du C.I. Pigment Yellow 74 en tant que pigment de base et un ou plusieurs dispersants pigmentaires, pour la pigmentation de toners et développeurs électrophotographiques, d'encres, de systèmes de liants aqueux et de filtres colorés, **caractérisée en ce que** les dispersants pigmentaires sont choisis dans le groupe constitué par C.I. Pigment Yellow 61, 61:1, 62, 62:1, 168, 169 et 191:1 ou une association de composés de formules (IV) et (V) 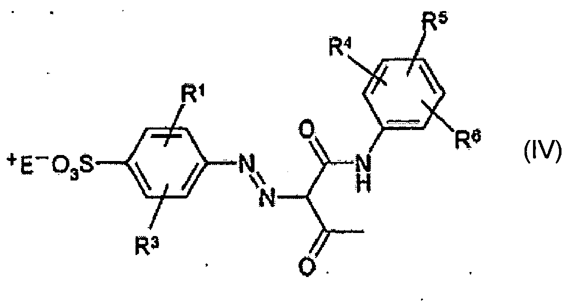 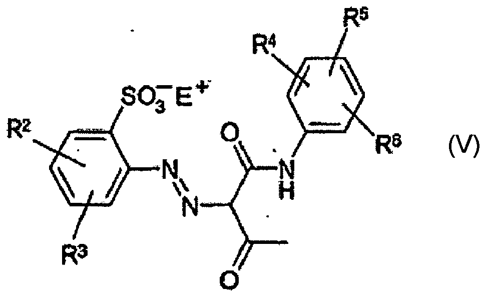 dans lesquelles
R¹, R², R³, R⁴, R⁵ et R⁶ représentent indépendamment les uns des autres un atome d'hydrogène ou d'halogène, un groupe alkyle en C₁-C₄, alcoxy en C₁-C₄, nitro, trifluorométhyle, cyano, phényle, un groupe SO₃⁻E⁺ ou un groupe COO⁻E⁺, étant entendu qu'au moins un et au maximum deux groupes ioniques du type SO₃⁻E⁺ ou COO⁻E⁺ est/sont présent(s), et que dans le cas de deux groupes ioniques un groupe se trouve dans le radical copulant et l'autre dans le radical de base du composé de formule (IV) ou (V)
E⁺ représente H⁺ ;
l'équivalent M^{m+}/m d'un cation métallique M^{m+}, m étant l'un des nombres 1, 2 ou 3 ;
un ion phosphonium ; ou un ion ammonium substitué ou non substitué.

2. Utilisation selon la revendication 1, **caractérisée en ce que** R¹, R², R³, R⁴, R⁵ et R⁶ représentent un atome d'hydrogène ou de chlore, le groupe méthyle, trifluorométhyle ou méthoxy.

3. Utilisation selon la revendication 1 ou 2, **caractérisée en ce que** E⁺ a la signification de H⁺, Na⁺, Ca²⁺, Mg²⁺, Sr²⁺, Ba²⁺, Mn²⁺ ou Al³⁺.

4. Utilisation selon une ou plusieurs des revendications 1 à 3, **caractérisée en ce que** la préparation de pigment contient
a) 50 à 99,9 % en poids, de préférence 60 à 99,5 % en poids, de Pigment Yellow 74,
b) 0,1 à 25 % en poids, de préférence 0,5 à 15 % en poids, de 1, 2, 3, 4, 5 ou 6, de préférence 1, 2, 3 ou 4, dispersants pigmentaires,
c) 0 à 25 % en poids, de préférence 0 à 15 % en poids d'adjuvants,
les proportions des composants respectifs se rapportant au poids total de la préparation (100 % en poids).

5. Utilisation selon une ou plusieurs des revendications 1 à 4, pour la pigmentation d'encres pour impression par jet d'encre.

6. Utilisation selon la revendication 5, **caractérisée en ce que** l'encre pour impression par jet d'encre est une encre en microémulsion, une encre pour impression par jet d'encre à base de solvant ou une encre pour impression par jet d'encre hot-melt.

7. Utilisation selon une ou plusieurs des revendications 1 à 4, pour la pigmentation d'encres d'impression à l'eau, de peintures à l'eau et de vernis à l'eau.

8. Utilisation selon au moins l'une des revendications 1 à 7, en une quantité de 0,05 à 30 % en poids, par rapport à la matière à pigmenter.
